# EUROPÄISCHE PATENTSCHRIFT

(11) **EP 3 752 763 B1**
(45) Veröffentlichungstag und Bekanntmachung des Hinweises auf die Patenterteilung: **12.06.2024**
(21) Anmeldenummer: 19714309.2
(22) Anmeldetag: 13.02.2019
(51) Int. Cl.: F16L 55/163

(54) **DICHTUNGSMANSCHETTE ZUM EINSETZEN IN EIN ROHRLEITUNGSSYSTEM**
SEALING SLEEVE FOR INSERTING INTO A PIPING SYSTEM
MANCHETTE D'ÉTANCHÉITÉ POUR ÊTRE INTRODUITE DANS UN SYSTÈME DE CANALISATIONS

(30) Priorität: 15.02.2018 DE 202018100823 U
(43) Veröffentlichungstag der Anmeldung: 23.12.2020
(73) Patentinhaber: Bohnet, Hans, 75328 Schömberg/Langenbrand (DE)
(72) Erfinder: EITEL, Jens, 75323 Wildbad (DE)
(74) Vertreter: Straub, Bernd
(86) Internationale Anmeldenummer: PCT/DE2019/100141
(87) Internationale Veröffentlichungsnummer: WO 2019/158160

(56) Entgegenhaltungen:
- EP-A1- 0 805 932
- DE-U1-202016 104 723

## Beschreibung

Die Erfindung betrifft eine Dichtungsmanschette zum Einsetzen in ein Rohrleitungssystem zwecks Abdichtung von Leckstellen eines Rohrleitungssystems, wie sie z.B. für Abwasserkanäle bekannt sind.

Es existieren verschiedene Techniken zum Abdichten von Rohrleitungssystemen. Man unterscheidet das Abdichten von Rohrleitungssystemen von innen, insbesondere von solchen Rohrleitungssystemen, die begehbar sind, gegenüber dem Abdichten von Rohleitungssystemen von außen. Die Unterschiede sind vielfältig und grundsätzlicher Natur, so dass zum Beispiel ein System zur Abdichtung von innen nicht zur Abdichtung von außen verwendet werden kann und umgekehrt.

Aus der Internationalen Patentanmeldung WO 2013/127498 A1 ist eine Manschette zum Anpressen einer Dichtmanschette an ein erstes und ein zweites Rohr im Bereich des Stoßes von außen bekannt. Dabei wird die Dichtmanschette über den abzudichtenden Bereich, insbesondere über einen Bereich mit Spalt zwischen aneinanderstoßenden Rohren, gestülpt und mit einer mehrteiligen metallischen Manschette, die die Dichtmanschette umschließt, von außen an das Rohr gepresst, das dadurch abgedichtet wird. Dieses System zur Abdichtung eines Rohres von außen erweist sich in seiner Struktur als sehr komplex und als aufwändig zu handhaben. Zusätzlich ist es in der Handhabung besonders fehleranfällig.

Aus der Europäischen Patentanmeldung EP 2 603 728 A1 ist ein System zur Abdichtung eines Rohrleitungssystems von innen mit einem fluiddichten Schlauch zur Einbringung in den Bereich des Spaltes zwischen zwei Rohren eines abzudichtenden Rohrleitungssystems bekannt. Dabei ist der Schlauch mit einem ein Ventil enthaltendes Zuführelement zum Einbringen des Fluides in den Schlauch versehen und das System mit einer Pumpe zum Fördern des Fluides versehen, die mit dem Zuführelement verbindbar ist. Insbesondere enthält das System darüber hinaus einen metallischen Schutzring, der inwändig im Bereich des mit dem erfindungsgemäßen Schlauch versehenen Rohrspaltes so angeordnet ist, dass der Schutzring den Spalt mit dem Schlauch auf der Innenseite der beiden Rohrenden bedeckt und dadurch eine Behinderung oder Beschädigung des Schlauches durch vorbeigleitende, im Rohr geförderte Gegenstände, die scharfkantige Ecken enthalten können, verhindert. Hierdurch ist ein sehr sicheres und gut handhabbares System zur Abdichtung eines Rohrleitungssystems geschaffen.

Aus der Deutschen Patentanmeldung DE 44 01 318 A1 ist bekannt, Leckstellen von Rohren vom Rohrinnern her abzudichten. Hierzu dienen spiralig zusammengebogene, gummiüberzogene und mit besonderen Dichtungsringen versehene Manschetten aus federelastischem, korrosionsbeständigem Stahlblech, welche in das zu dichtende Rohr bis zur Stelle der Undichtigkeit eingebracht werden. Dort werden sie mittels eines aufblasbaren Luftkissens oder einer mechanischen Montiereinrichtung so lange aufgeweitet, bis sie sich unter Zusammenpressen der Dichtungsringe sehr eng an die Rohrinnenwand angelegt haben. Eine Arretierungsvorrichtung mit einem mit einer Zahnreihe kämmenden Ritzel und einem in dessen Zähne eingreifenden, federnden Sperrriegel hält dabei die Dichtungsmanschette in ihrer aufgeweiteten Stellung. Nachteilig sind jedoch hierbei die schwierige Handhabung, die eine maschinelle Handhabung weitgehend ausschließt, und das nicht sichere Abdichten.

Aus dem Europäischen Patent EP 0 805 932 B1 ist eine aus einem aufweitbaren Stahlband bestehende Dichtungsinnenmanschette zum Einsetzen in zu reparierende, leckende Rohre bekannt, die eine Arretierungsvorrichtung besitzt, welche sehr kleine Rastschritte gestattet. Hierzu ist am innenliegen
den Bandende ein mit zwei Zahnreihen versehener Schlitz vorgesehen, während am außenliegenden Bandende ein Spannritzel, ein Führungsritzel und ein Sperrritzel drehbar gelagert sind. Eine Spannfeder greift an der Drehachse des Sperrritzels an, hält das Sperrritzel im Eingriff mit dem Führungsritzel und drückt es in den Zwischenraum zwischen Spannritzel und Führungsritzel. Mit Hilfe des unter der Einwirkung der Spannfeder stehenden, als Riegel wirkenden Sperrritzels wird erreicht, dass nach erfolgtem Aufweiten die Spannung der Dichtungsinnenmanschette nach Einrasten des Sperrriegels in das Spannritzel nahezu vollständig erhalten bleibt, was die Voraussetzung für ein ausgezeichnetes Abdichten der Leckstelle ist. Diese Dichtungsinnenmanschette erweist sich in ihrem Ausbau als sehr komplex und in der Handhabung aufwändig und insbesondere hinsichtlich einer maschinellen Handhabung als wenig geeignet.

Aus dem Deutschen Gebrauchsmuster DE 20 2016 104 723 U1 ist eine Dichtungsmanschette zum Einsetzen in ein Rohrleitungssystem zwecks Abdichtung einer Leckstelle, mit einem ringförmig zusammengebogenen, aufweitbaren Stahlblech, dessen innenliegendes Bandende und außenliegendes Bandende sich in Umfangsrichtung überlappen, bekannt. Es ist mit wenigstens einer Arretiervorrichtung in Gestalt eines im Stahlband in Umfangsrichtung angeordneten Schlitzes mit wenigstens einer Zahnreihe und wenigstens einem Rastorgan, das geeignet ist, in wenigstens eine Zahnreihe rastend einzugreifen, versehen. Weiterhin weist wenigstens ein Rastorgan einen Träger auf, der mit mehreren Federelementen versehen ist, die elastisch federnd und gegen den Träger federnd verschwenkbar ausgebildet sind und geeignet sind, rastend in wenigstens eine Zahnreihe einzugreifen. Diese Dichtungsmanschette zeigt eine gut handhabbare Arretiervorrichtung, deren Rastwirkung sehr spezifisch von den gewählten Materialien und der Dimensionierung der Federelemente abhängt.

Der Erfindung liegt die Aufgabe zugrunde, eine weitere Dichtungsmanschette zum Einsetzen in ein Rohrleitungssystem zwecks Abdichtung von Leckstellen eines Rohrleitungssystems und ein Rohrleitungssystem zwecks Abdichtung von Leckstellen mit einer solchen erfindungsgemäßen Dichtungsmanschette anzugeben, welche eine verlässliche Abdichtung eines Rohrleitungssystems von innen, insbesondere im Bereich aneinanderstoßender Rohre ermöglicht, dabei einfach zu handhaben ist und hinsichtlich einer maschinellen Handhabung geeignet ist.

Diese Aufgabe wird durch eine Dichtungsmanschette zum Einsetzen in ein Rohrleitungssystem zwecks Abdichtung von Leckstellen eines Rohrleitungssystems mit den Merkmalen des Anspruchs 1 und ein Rohrleitungssystem mit den Merkmalen des Anspruchs 12 gelöst.

Vorteilhafte Weiterbildungen der Dichtungsmanschette zum Einsetzen in ein Rohrleitungssystem zwecks Abdichtung von Leckstellen eines Rohrleitungssystems beziehungsweise des Rohrleitungssystems sind Gegenstand der abhängigen Ansprüche. Die erfindungsgemäße Dichtungsmanschette zum Einsetzen in ein Rohrleitungssystem zur inneren Abdichtung desselben besteht aus einem ringförmig zusammengebogenen, aufweitbaren Stahlblech, dessen Bandenden sich in Umfangsrichtung überlappen. Sie zeigt wenigstens eine Arretiervorrichtung in Gestalt eines im Stahlband angeordneten, in Umfangsrichtung ausgerichteten Schlitzes mit wenigstens einer Zahnreihe und wenigstens einem Rastorgan. Das Rastorgan ist erfindungsgemäß geeignet, in wenigstens eine Zahnreihe rastend einzugreifen und ist erfindungsgemäß mehrteilig mit wenigstens einem Führungselement, mit wenigstens einem Rastelement und mit wenigstens einem in einem Spalt zwischen einem Führungselement und einem Rastelelement angeordneten Spannelement ausgebildet. Dies erfolgt erfindungsgemäß so, dass die Spannkraft zwischen dem Führungselement und dem Rastelement die Rastwirkung des Rastorgans in Verbindung mit der Zahnreihe, in die es rastend eingreift, festlegt. Abhängig vom Spannzustand und der Größe der Spannkraft ist die Rastwirkung verändert. Dabei gewährleistet das Führungselement erfindungsgemäß eine sichere und verlässliche Lenkung der Spannkraft auf das Rastelement und damit in Richtung der Zahnreihe, in die das Rastorgan respektive das Rastelement des Rastorgans rastend eingreifen kann. Das Rastorgan und die entsprechende erfindungsgemäße Dichtungsmanschette zeigen einen einfachen strukturellen Aufbau. Dieser ermöglicht eine sichere Funktionalität auch unter schwierigen Bedingungen, was darüber hinaus auch die Möglichkeit eröffnet, mit Hilfe von Robotern oder anderen maschinellen Vorrichtungen gehandhabt zu werden. Dabei erfolgt dies bevorzugt mit Hilfe einer elektromotorischen oder hydraulischen Spannvorrichtung.

Der erfindungsgemäß integrierte Aufbau des Rastorgans ohne zusätzliche, separate federnde Elemente ermöglicht diese Vorteile in besonderem Maße.

Eine bevorzugte, erfindungsgemäße Dichtungsmanschette zum Einsetzen in ein Rohrleitungssystem zur inneren Abdichtung desselben zeigt wenigstens eine Arretiervorrichtung in Gestalt eines im innenliegenden Bandende in Umfangsrichtung angeordneten Schlitzes mit wenigstens einer Zahnreihe und wenigstens ein mit dem außenliegenden Bandende verbundenes Rastorgan. Dabei ist das Rastorgan geeignet, in wenigstens eine Zahnreihe rastend einzugreifen und dadurch den Umfang des ringförmig zusammengebogenen Stahlblechs der Dichtungsmanschette festzulegen. Durch diese Ausbildung einer Arretiervorrichtung der erfindungsgemäßen Dichtungsmanschette wird es möglich, dass das außenliegende Bandende flächig und durchgehend im Bereich der Arretiervorrichtung ausgebildet sein kann und dadurch in diesem Bereich insbesondere in Verbindung mit einem radial nach außen sich anschließenden Gummiband eine besonders verlässliche Dichtwirkung erreicht werden kann. Zudem erweist sich die Handhabung dieser Dichtungsmanschette mit einer solchen Arretiervorrichtung als besonders einfach, da die Handhabung primär vom Innenbereich des zu einem Ring geschlossenen Stahlbandes erfolgen kann.

Dies ist im Besonderen dann von Vorteil, wenn die Arretiervorrichtung als lösbare, öffenbare Arretiervorrichtung ausgebildet ist.

Eine bevorzugte, alternative und erfindungsgemäße Dichtungsmanschette zum Einsetzen in ein Rohrleitungssystem zur inneren Abdichtung desselben zeigt wenigstens eine Arretiervorrichtung in Gestalt eines im außenliegenden Bandende in Umfangsrichtung angeordneten Schlitzes mit wenigstens einer Zahnreihe und wenigstens ein mit dem innenliegenden Bandende verbundenes Rastorgan. Dabei ist das Rastorgan geeignet, in wenigstens eine Zahnreihe rastend einzugreifen und dadurch den Umfang des ringförmig zusammengebogenen Stahlblechs der Dichtungsmanschette festzulegen. Durch diese Ausbildung einer Arretiervorrichtung der erfindungsgemäßen Dichtungsmanschette wird es möglich, dass das innenliegende Bandende flächig und durchgehend im Bereich der Arretiervorrichtung ausgebildet sein kann und dadurch in diesem Bereich ein Schutz der Arretiervorrichtung vor Beschädigung oder vor einer falschen Handhabung erreicht werden kann.

Bei einer weiteren alternativen Dichtungsmanschette ist das innenliegende Bandende in einer Nut zwischen dem außenliegenden Bandende und einer mit dem außenliegenden Bandende fest verbundenen Deckfläche geführt. In einem Schlitz mit der oder den Zahnreihen, der in der Deckfläche und/oder in dem außenliegenden Bandende angeordnet ist und in Umfangsrichtung ausgerichtet ist, ist das erfindungsgemäße Rastorgan gelagert, insbesondere schwimmend gelagert. Das Rastorgan legt das Maß der Aufweitung des bandförmigen Stahlblechs und damit den Umfang der erfindungsgemäßen Dichtungsmanschette fest. Dies erfolgt insbesondere dadurch, dass das Rastorgan das Maß des Eindringens des inneren Bandendes in die Nut reduziert und dadurch eine Aufweitung bewirkt. Dabei sind bevorzugt allein das oder die Spannelemente federnd elastisch ausgebildet, während die anderen Teile des Rastorgans bevorzugt im Wesentlichen starr ausgebildet sind.

Vorzugsweise wird das im Schlitz gelagerte insbesondere schwimmend gelagerte Rastorgan der erfindungsgemäßen Dichtungsmanschette mit einer Vorrichtung zur Verhinderung des Herausgleitens aus dem Schlitz - insbesondere durch an der Deckfläche und/oder im Bereich des Schlitzes am Bandende mit Schlitz angeordnete, herauskragende Vorsprünge, die das oder die Rastorgane räumlich festlegen - versehen, was die maschinelle Handhabbarkeit weiter verbessert.

Nach einer bevorzugten Weiterbildung der erfindungsgemäßen Dichtungsmanschette wird das bandförmige Stahlblech aus mehreren Bandsegmenten gebildet, die miteinander verbunden sind und das gesamte, zusammenhängende Stahlblech bilden. Bevorzugt werden die Bandsegmente lösbar miteinander so verbunden, dass ein Zusammensetzen im Bereich der Leckstelle in dem abzudichtenden Rohrleitungssystem oder auch ein Zerlegen des bandförmigen Stahlblechs ermöglicht ist, was gerade bei abzudichtenden Rohrleitungssystemen mit großem Innendurchmesser von besonderer Bedeutung ist. Durch diese bevorzugte Weiterbildung ist die Handhabung insbesondere die maschinelle Handhabung in besonderem Maße ermöglicht. Die lösbare Verbindung wird dabei vorzugsweise als Nut-Feder-Verbindung realisiert und diese insbesondere einheitlich zu der Nut-Feder-Verbindung der Arretiervorrichtung ausgebildet. Dies ermöglicht eine modulare Nutzung, insbesondere den Austausch einzelner Bandsegmente. Auch haben sich scharnierartige insbesondere lösbare, scharnierartige Verbindungen der einzelnen Bandsegmente bewährt.

Neben der Möglichkeit, in einem einzigen Bereich am Umfang der erfindungsgemäßen Dichtungsmanschette eine einzige Arretiervorrichtung vorzusehen, hat es sich als besonders vorteilhaft erwiesen, mehrere insbesondere zwei gleichartige Arretiervorrichtungen vorzusehen. Diese zwei Arretiervorrichtungen zeigen bevorzugt die gleichen Rastorgane, dieselbe Orientierung des Schlitzes, dieselbe Länge des Schlitzes sowie vorzugsweise dieselben Zahnreihen. Diese Ausbildung der Bestandteile der mehreren Arretiervorrichtungen gewährleistet einerseits eine sehr sichere Rastverbindung durch die vergrößerte Anzahl der Rastverbindungen - gerade für sehr große erfindungsgemäße Dichtungsmanschetten, das heißt für große Innendurchmesser eines Rohrleitungssystems und/oder gerade für große Breiten der Dichtungsmanschette - und andererseits eine sehr gute Dichtwirkung, da ein ungewollt schräges Verrasten der überlappenden Bandenden weitgehend verhindert ist. Dabei können auch mehrere solcher Bereiche mit mehreren Arretiervorrichtungen gerade bei der Verwendung mehrerer Bandsegmente vorgesehen sein.

Vorzugsweise ist wenigstens ein Spannelement des Rastorgans der Dichtungsmanschette als Keil und/oder als Federelement ausgebildet. Abhängig von dem Maß des Einbringens des Keils in den Spalt lässt sich die Spaltbreite und damit die Spannkraft und infolgedessen die Rastwirkung variieren, wodurch eine wirkungsvolle Arretierung beim Erreichen der gewünschten Arretierungsposition geschaffen ist. Alternativ oder ergänzend dazu hat es sich bewährt, ein Federelement als Spannelement vorzusehen, das in den Spalt ragt und federnd das Rastelement relativ zum Führungselement bewegt und dadurch die Spannkraft und demzufolge die Rastwirkung verändert und festlegt. Durch die Verwendung derartiger Federelemente kann auf eine Mechanik zur Betätigung eines Keils verzichtet werden, was den Aufbau des Rastorgans vereinfacht und dadurch weniger anfällig macht. Bevorzugt werden in Verbindung mit einem Federelement als Spannelement die Zähne der Zahnreihen beziehungsweise des Rastorgans so ausgebildet, dass durch die Wahl der Steigung oder Formgebung der Zähne ein Zurückrutschen des Rastorgans und damit ein Lockern der Manschette erschwert oder gar vermieden werden kann, während das Erweitern der Dichtungsmanschette gegenüber dem Lockern vereinfacht ist.

Von den vielen verschiedenen Ausbildungen eines Federelements als Spannelement haben sich besonders solche bewährt, die als einfach gekrümmtes Federelement in dem Spalt angeordnet sind, welche abhängig von dem Krümmungsradius eine unterschiedliche Spannkraft auf das Rastelement einbringen, beziehungsweise die als gerades Federelement schräg im Spalt angeordnet sind und lateral ausgelenkt werden und abhängig vom Maß der lateralen Auslenkung eine unterschiedliche Spannkraft auf das Rastelement einbringen. Gerade diese bevorzugten Federelemente haben sich durch ihren einfachen Aufbau und ihre spezifische Möglichkeit der Festlegung des gewünschten Spannkraftbereiches besonders bewährt.

Neben der Möglichkeit, ein einziges Spannelement in einem einzigen Spalt vorzusehen, hat es sich besonders bewährt, mehrere Spannelemente in einem einzigen Spalt zwischen einem Führungselement und einem Rastelement anzuordnen. Hierdurch wird es möglich, besonderes hohe Spannkräfte und dadurch besonders gute Rastwirkungen zu erzielen. Weiterhin gelingt es, durch die Anordnung mehrerer Spannelemente in einem einzigen Spalt das Risiko eines Verkantens des Rastelementes in der Führung des Führungselementes durch ein zu einseitiges Spannen zu verhindern und dadurch die Sicherheit der Funktionsfähigkeit zu verbessern. Besonders bewährt hat es sich dabei, die Spannelemente in dem einen einzigen Spalt deutlich voneinander zu beabstanden, insbesondere gleichmäßig in dem Spalt zu verteilen und dadurch eine gleichmäßige Spannkrafteinwirkung zu ermöglichen. Vorzugsweise werden dabei gleichartige, insbesondere gleichwirkende Spannelemente verwendet, was die Handhabung insbesondere die Wartung erleichtert.

Die erfindungsgemäße Dichtungsmanschette zeigt ein Rastorgan mit wenigstens einem Rastelement, das u-förmig ausgebildet ist und wenigstens ein Führungselement umgreifend führt, oder ein Rastorgan mit wenigstens einem Führungselement, das u-förmig ausgebildet ist und wenigstens ein Rastelement umgreifend führt. Durch diesen Aufbau ist sichergestellt, dass das Rastelement von beiden Schenkeln des u-förmigen Führungselementes lateral geführt wird und damit durch das oder die Spannelemente in Richtung aus dem U heraus gedrückt wird und dadurch gegen die dort befindliche Zahnreihe des Schlitzes gepresst wird und dadurch rastend eingreift. Die Führung ist besonders vorteilhaft dann gegeben, wenn die Breite des Rastelementes wenig geringer als der Abstand der beiden Schenkel gewählt ist und wenn der Abstand der Schenkel über die Länge der Schenkel konstant oder weitgehend konstant gewählt ist. Bei dem u-förmigen Führungselement werden das oder die Spannelemente bevorzugt im Spalt an der Basis des u-förmigen Führungselementes zwischen den beiden Schenkeln des u-förmigen Führungselementes angeordnet, was eine besonders sichere Funktionalität gewährleistet.

Ergänzend zu der oben beschriebenen Ausführung einer Dichtungsmanschette hat es sich auch bewährt, ein Rastorgan mit wenigstens einem Vorsprung an einem Führungselement oder einem Rastelement zu versehen, der in eine mit dem Vorsprung korrespondierende Ausnehmung in einem Rastelement oder Führungselement eingreift und dieses führend leitet. Durch diese Führung wird erfindungsgemäß verhindert, dass sich das Rastelement gegenüber dem Führungselement verkantet oder zu sehr lateral verschiebt, so dass die Funktion des Rastorgans eingeschränkt oder gar verhindert ist. Damit gelingt es, die Betriebssicherheit der Dichtungsmanschette im besonderen Maß zu gewährleisten.

Eine besonders bevorzugte Dichtungsmanschette zeigt in Umfangsrichtung auf einer einzigen Seite des Rastorgans eine oder mehrere Rastflächen, die geeignet sind, rastend in eine Zahnreihe eines Schlitzes einzugreifen. Durch das Vorsehen der Rastflächen nur auf einer Seite wird das Verschieben des Rastorgans vereinfacht, da nur eine Seite rastend eingreift und die anderen Seiten nicht rastend im Schlitz gleitend geführt sind. Damit gelingt es, einerseits die Handhabung zu vereinfachen und andererseits die Komplexität des Rastorgans zu verringern. Auch ist es möglich, das Rastorgan in einem Schlitz mit zwei Zahnreihen einmal als linksrastendes Rastorgan und alternativ als rechtsrastendes Rastorgan einzusetzen, was der Benutzer nach Bedarf frei wählen kann.

Vorzugsweise können die eine oder die mehreren Rastflächen beispielsweise durch raue Flächen in der Art von Reibflächen oder von schräg zur Umfangsrichtung stehenden Flächen beispielsweise als Flächen von Rastzähnen oder Raststegen ausgebildet sein, die beim Einwirken einer Spannkraft rastend wirken und eine Beschränkung der Bewegungsfreiheit des Rastorgans und damit der Arretiervorrichtung in Umfangsrichtung bewirken. Bevorzugt sind die Rastflächen so in ihrer Größe, Zahl und/oder Orientierung gewählt, dass diese eine Lockerung der Dichtungsmanschette stärker beschränken als eine Erweiterung der Dichtungsmanschette. Damit ist ein Anspannen und Abdichten der Dichtungsmanschette gegenüber dem abzudichtenden Rohr weniger beschränkt als das Lockern. Folglich ist es leichter, die Dichtungsmanschette zu erweitern und dichtend anzuspannen als diese zu lockern, wodurch ein unerwünschtes Lockern verhindert werden kann und dadurch die Handhabung vereinfacht werden kann.

Es hat sich besonders bewährt, den Abstand der freien Enden der Rastzähne beziehungsweise Raststege auf einer Seite des Rastorgans gleich oder weitgehend gleich zu dem Abstand der Zähne der Zahnreihe des Schlitzes, in die diese rastend eingreifen sollen, zu wählen. Dadurch ist sichergestellt, dass viele der Rastzähne beziehungsweise Raststege auf einer Seite in die zugehörigen Zwischenräume der Zähne einer Zahnreihe - diese haben den gleichen Abstand wie die Zähne der Zahnreihe - eingreifen und damit eine besonders sichere Rastverbindung gewährleisten.

Eine bevorzugte Ausbildung der Erfindung zeigt Rastflächen, die symmetrisch zu der Längsachse des Rastorgans oder zu einer Ebene insbesondere der Mittelebene, die in Längsrichtung des Rastorgans verläuft, angeordnet sind. Diese sind geeignet, rastend beispielsweise in unterschiedliche Zahnreihen eines Schlitzes einzugreifen. Dabei erfordert die Symmetrie keine exakte Positionierung der Rastflächen im mathematisch symmetrischen Sinne. Abweichungen von dieser mathematisch exakten Positionierung, beispielsweise durch einen lateralen Versatz, führen nicht zu einer wesentlich schlechteren Ausbildung der Erfindung. Durch das symmetrische Anordnen der Rastflächen auf zwei gegenüberliegenden Seiten des Rastorgans (Symmetrie) wird eine gleichmäßige Fixierung in der Art einer rastenden Verbindung mit beispielsweise zwei Zahnreihen auf zwei Seiten des Schlitzes ermöglicht, was zu der gewünschten sicheren Verbindung und guten Handhabung führt. Dies führt zu einem Kraftausgleich der Rastverbindungen auf beiden Seiten des Rastorgans und fördert damit besonders die Sicherheit der Rastung und zusätzlich insbesondere die Möglichkeit einer maschinellen Handhabung im besonderen Maße.

Vorzugsweise wird wenigstens ein Rastorgan mit wenigstens einem Führungsabschnitt versehen, das in Umfangsrichtung dem restlichen Rastorgan vor oder nachgelagert ist. Der Führungsabschnitt ist dabei mit dem restlichen Rastorgan fest verbunden und gleitet im Schlitz in Umfangsrichtung vor oder hinter dem restlichen Rastorgan in Längsrichtung des Schlitzes. Dabei führen der Führungsabschnitt beziehungsweise die bevorzugt zwei Führungsabschnitte das Rastorgan im Schlitz so, dass ein seitliches Verkippen aus der Umfangsrichtung, die die gewünschte Gleitrichtung des Rastorgans darstellt, beschränkt ist. Dies wird durch die Führungsfunktion des Führungsabschnittes insbesondere durch die Verlängerung des Rastorgans im Schlitz ermöglicht.

Im besonderen Maße wird dies dadurch verstärkt, dass die Breite eines oder mehrerer Führungsabschnitte gleich oder bevorzugt wenig geringer als die freie Breite insbesondere die geringste freie Breite des Schlitzes gewählt ist. Dadurch gelingt es, das unerwünschte Verkippen besonders gering zu halten. Mithin sind eine sichere Abdichtung und auch eine verlässliche Handhabung erreicht. Diese Handhabung ist besonders für den maschinellen Einsatz geeignet.

Weist wenigstens ein Rastorgan eine Höhe von mehr als die Bandstärke, vorzugsweise die mehrfache Bandstärke, insbesondere mehr als das 3-fache der Bandstärke, insbesondere im Bereich des 5-fachen der Bandstärke, auf, so gelingt es auf besonders vorteilhafte Weise, eine Arretiervorrichtung zu schaffen, die für unterschiedliche Rohrleitungssysteme mit unterschiedlichen Innendurchmessern eine sichere Abdichtung ermöglicht. Durch die erfindungsgemäße Wahl der Höhe des Rastorgans gelingt es auf verlässliche Weise, mögliche und in unterschiedlichem Maß vorliegende Abstände der überlappenden Bandenden im Bereich des Rastorgans zu kompensieren, ohne dass die gewünschte Rastwirkung verloren geht oder wesentlich geschwächt wird. Gerade bei geringen Innenrohrdurchmessern beziehungsweise bei großen Überlappbereichen der Bandenden entsteht ein besonderes Risiko eines großen Abstandes insbesondere eines besonders ausgeprägten Abstandes der Bandenden im Bereich des Rastorgans. Dies kann zu einem Herausgleiten der Zähne des Bandes aus dem Rastorgan führen, was zu einer deutlichen Verschlechterung der Rastwirkung bis zum Verlust derselben führen kann. Die negativen Auswirkungen eines solchen Abstandes werden durch diese bevorzugte Ausbildung des Rastorgans eingeschränkt oder sogar aufgehoben.

Dies ist in besonderem Maße gewährleistet, wenn die Arretiervorrichtung wenigstens einen Deckel aufweist, der mit wenigstens einem Rastorgan insbesondere lösbar verbunden ist. Der Deckel überragt das Rastorgan und bewirkt erfindungsgemäß ein Niederhalten des innenliegenden beziehungsweise außenliegenden Bandendes mit der Arretiervorrichtung. Dieses innenliegende beziehungsweise außenliegende Bandende wird somit zwischen dem außenliegenden beziehungsweise innenliegenden Bandende und dem Deckel festgelegt, wodurch ein sicheres und dauerhaftes Verbinden der Rastverbindung zwischen Rastorgan und der wenigstens einen Zahnreihe gewährleistet ist. Damit ist durch den Deckel einerseits ein unerwünschtes Trennen der Komponenten der Arretiervorrichtung insbesondere des Rastorgans und des Schlitzes, in den das Rastorgan rastend eingreift, gewährleistet und andererseits durch das Begrenzen des Spielraums zwischen dem außenliegenden beziehungsweise innenliegenden Bandende und dem Deckel ein sicheres, insbesondere gleichmäßiges rastendes Eingreifen in die Zahnreihe gewährleistet.. Dabei schließt sich bevorzugt der Deckel an das oder die Rastorgane seitlich lateral überkragend an und verhindert dadurch ein Herausgleiten der Zähne des Schlitzes aus den freien Enden der Rastzähne oder Raststege eines Rastorgans.

Neben der Möglichkeit, den Deckel fest mit dem Rastorgan zu verbinden, was zu einer wenig anfälligen erfindungsgemäßen Dichtungsmanschette führt, hat es sich auch bewährt, den Deckel lösbar mit dem Rastorgan zu verbinden. Dies erfolgt bevorzugt durch Verschrauben. Die lösbare Verbindung ermöglicht ein Trennen des Deckels und des Rastorgans, wodurch das innenliegende beziehungsweise außenliegende Bandende nicht mehr zwischen dem Deckel und dem außenliegenden beziehungsweise innenliegenden Bandende festgelegt ist und dadurch von dem Rastorgan getrennt werden kann. Dabei können die Zähne der Zahnreihen aus den Zwischenräumen der freien Enden der Rastzähne beziehungsweise Raststege eines Rastorgans aus diesen herausgleiten, so dass das bandförmige Stahlblech der Dichtungsmanschette wieder verengt werden kann, was zu einem reduzierten Durchmesser beziehungsweise Umfang führt. In diesem Zustand kann die erfindungsgemäße Dichtungsmanschette aus dem Rohrsystem entnommen und durch eine andere ausgetauscht werden.

Darüber hinaus zeigt eine bevorzugte Dichtungsmanschette wenigstens ein Rastorgan, das mit dem innenliegenden oder dem außenliegenden Bandende fest verbunden ist, insbesondere fest verschweißt ist. Gerade in Verbindung mit einem bevorzugt fest verbundenen Deckel ist dadurch eine robuste, dauerhafte und wartungsarme Dichtungsmanschette geschaffen, die im eingeengten Zustand in das abzudichtende Rohrleitungssystem an die Leckstelle eingebracht werden kann, um sie anschließend aufzuweiten, indem der Überlapp der Bandenden reduziert wird.

Alternativ dazu hat es sich auch bewährt, das Rastorgan mit wenigstens einer Ausnehmung zur Aufnahme wenigstens einer Erhebung, insbesondere wenigstens eines Zapfens am außenliegenden oder innenliegenden Bandende ohne Schlitz zu versehen. Dadurch ist die Möglichkeit geschaffen, das wenigstens eine Rastorgan im Schlitz mit dem außenliegenden oder innenliegenden Bandende ohne Schlitz lösbar zu verbinden. Durch das Einbringen der Erhebung beziehungsweise des Zapfens in die Ausnehmung des Rastorgans kann bei Bedarf das Rastorgan gegen ein anderes Rastorgan mit anderen Eigenschaften, insbesondere mit größeren Rastzähnen oder Raststegen, ausgetauscht werden. Auch ist die Möglichkeit geschaffen, dass sich das Rastorgan relativ zu dem außenliegenden oder innenliegenden Bandende ohne Schlitz respektive zu der Erhebung beziehungsweise dem Zapfen lateral bewegt. Dies führt dazu, dass Toleranzen zum Beispiel aus der Fertigung ausgeglichen werden können, was gerade bei Rastorganen mit symmetrisch verteilten Rastflächen und zwei symmetrisch im Schlitz angeordneten Zahnreihen durch die Gleichgewichtsposition mit ausgeglichenen Spannkräften beziehungsweise Rastkräften für beide Rastverbindungen besonders ermöglicht ist. Dies führt zu einer besonders sicheren Rastverbindung und damit zu einer sehr verlässlichen Abdichtung durch die erfindungsgemäße Dichtungsmanschette.

Dabei hat es sich als besonders vorteilhaft erwiesen, die wenigstens eine Ausnehmung und die wenigstens eine Erhebung so auszubilden, dass das Rastorgan verdrehsicher auf dem beziehungsweise an dem außenliegenden oder innenliegenden Bandende ohne Schlitz angeordnet werden kann. Die Verdrehsicherheit wird vorzugsweise dadurch erreicht, dass die korrespondierenden Ausnehmungen beziehungsweise Erhebungen eine Form aufweisen, die ein Einbringen der Erhebung in die korrespondierende Ausnehmung nur in einer einzigen Orientierung ermöglichen. Alternativ hat es sich auch bewährt, mehrere Ausnehmungen und Erhebungen so auszubilden und/oder so anzuordnen, dass ein Zusammenfügen nur in einer Orientierung ermöglicht ist. Hierdurch gelingt es, eine Fehlfunktion aufgrund einer falschen Orientierung des Rastorgans zu vermeiden und dadurch die Funktionalität der Dichtungsmanschette auch unter schwierigen Umständen bei der Montage gerade bei einer maschinellen Montage zu gewährleisten.

Als besonders bevorzugte Ausbildung der Dichtungsmanschette hat es sich erwiesen, den Deckel mit einer oder mehreren Erhebungen zu verbinden, die durch eine korrespondierende Ausnehmung im Rastorgan hindurchragen. Die Verbindung kann dabei lösbar, insbesondere durch Verschraubung oder mittels einer Bajonettverbindung oder Rastverbindung, oder als feste Verbindung, insbesondere durch Verschweißen oder Verlöten oder Verkleben oder Vernieten, ausgebildet sein. Diese bevorzugte Dichtungsmanschette ermöglicht einerseits ein flexibles Anpassen der Position des Rastorgans um die wenigstens eine Erhebung, die insbesondere stiftförmig ausgebildet ist, und andererseits ein sicheres Rasten durch die eingeschränkte Bewegungsfreiheit des innenliegenden beziehungsweise außenliegenden Bandendes beziehungsweise des Schlitzes zwischen Deckel und außenliegendem beziehungsweise innenliegendem Bandende. Die lösbare Verbindung zwischen Deckel und Erhebung wird bevorzugt dann gewählt, wenn ein späteres Entfernen der Dichtungsmanschette aus dem Rohrleitungssystem auf einfache Weise ermöglicht werden soll. Dies ist insbesondere durch die Ausbildung der lösbaren Verbindung mittels einer Bajonettverbindung oder Rastverbindung gegeben.

Dabei hat es sich besonders bewährt, wenigstens eine Erhebung insbesondere wenigstens einen Zapfen im Bereich des Deckels als Taumelniete auszubilden, die auf der Seite des Deckels mittels eines taumelnden Nietwerkzeuges so verformt wird, dass sich der Deckel nicht mehr von der Taumelniete löst und der durch das taumelnde Nietwerkzeug verbreiterte Nietkopf nur wenig oder gar nicht über den Deckel kragt. Dies gelingt umso mehr, wenn bevorzugt die Ausnehmung im Deckel zur Aufnahme der Taumelniete am äußeren Rand eine Fase zeigt, durch die der durch das taumelnde Nietwerkzeug erzeugte, verbreiterte Kopf vollständig oder weitgehend aufgenommen wird. Hierdurch gelingt es, eine Beschädigung insbesondere ein Abreißen des erzeugten Nietkopfes auf der Außenseite des Deckels weitgehend auszuschließen und dadurch die Funktionsfähigkeit dieser Dichtungsmanschette zu gewährleisten.

Alternativ oder ergänzend hat es sich bewährt, wenigstens eine Erhebung insbesondere wenigstens einen Zapfen als eine im Durchmesser gestufte Erhebung insbesondere als einen im Durchmesser gestuften Zapfen auszubilden. Dabei ist deren gestufter Durchmesser den unterschiedlichen Öffnungsdurchmessern des inneren Bandes, des Rastorgans des äußeren Bandes und/oder des Deckels entsprechend gewählt. Dadurch gelingt es, neben der lateralen Führung der Erhebung beziehungsweise des Zapfens eine axiale Führung der Bänder beziehungsweise des Deckels oder des Rastorgans zu erreichen. Dies reduziert das Risiko von Fehlfunktionen.

Vorzugsweise wird der Deckel so ausgebildet, dass er in wenigstens einem lateral zur Umfangsrichtung angeordneten Randbereich abgeknickt ausgebildet ist. Das Abknicken erfolgt in einer Weise, dass der Rand des Deckels in Richtung des außenliegenden beziehungsweise innenliegenden Bandendes abgesenkt ist. Dadurch ist ein trapezartiger Querschnitt gegeben. Die eine oder die mehreren Knicklinien sind dabei bevorzugt so gewählt, dass sie nicht im Bereich des Rastorgans angeordnet sind und damit außerhalb der Ausdehnung des Rastorgans parallel zur Umfangsrichtung verlaufen. Der durch die abgeknickten Schrägen des Deckels reduzierte Abstand zum außenliegenden beziehungsweise innenliegenden Bandende ist dabei kleiner als die Höhe des Rastorgans gewählt. Vorzugsweise ist er etwa halb so hoch wie die Höhe des Rastorgans gewählt. Hierdurch gelingt es, das innenliegende beziehungsweise außenliegende Bandende im Bereich der Arretiervorrichtung in radialer Richtung in seiner Bewegungsfreiheit einzuschränken und so festzulegen, dass die Funktionsfähigkeit der Arretiervorrichtung in besonderem Maße sichergestellt ist.

Wird wenigstens ein auf der Innenseite der überlappenden Bandenden angeordneter Deckel in Umfangsrichtung verjüngend ausgebildet und/oder wenigstens ein auf der Außenseite der überlappenden Bandenden angeordneter Deckel in Umfangsrichtung vergrößernd ausgebildet, gelingt es, das radial festgelegte innenliegende beziehungsweise außenliegende Bandende nur in geringem Maße einer Knickbelastung zu unterziehen, was sich positiv auf die Struktur der erfindungsgemäßen Dichtungsmanschette auswirkt und eine verlässliche Verrastung ermöglicht. Der Rand des Deckels zeigt dabei bevorzugt eine Kontur eines Kreissegmentes, das insbesondere einen Radius entsprechend dem Innenradius des abzudichtenden Rohrleitungssystems aufweist. Dadurch ist gerade im abdichtenden Zustand ein gleichmäßiges und flächiges Anliegen des innenliegenden Bandendes an den Deckel erleichtert, was das unerwünschte Abknicken des bandförmigen Stahlblechs reduziert.

Neben der Möglichkeit, den Deckel verformbar insbesondere plastisch verformbar auszubilden, hat es sich besonders bewährt, wenigstens einen insbesondere mehrere Deckel elastisch auszubilden, wodurch sich der Deckel mit dem Stahlblech gemeinsam federnd elastisch dem abzudichtenden Rohrleitungssystem anpassen kann. Dadurch ergibt sich eine sehr robuste Dichtungsmanschette. Vorzugsweise wird der Deckel im Bereich des Schlitzes so ausgebildet, dass er sich über dem Schlitz von dem Bandende mit dem Schlitz abhebt, wodurch das Rastorgan in dem Schlitz und dem dadurch entstandenen Raum zwischen Deckel und Bandende mit Schlitz gut im Schlitz entlang gleiten kann. Dadurch ist es möglich, die Reibung zwischen Deckel und Rastorgan zu reduzieren.

In einer bevorzugten Ausbildung der erfindungsgemäßen Dichtungsmanschette ist wenigstens ein insbesondere alle Deckel vorgesehen und so ausgebildet, dass er einen Schlitz, der dem Deckel zugeordnet ist, ganz oder weitgehend überdeckt. Durch diese Überdeckung, insbesondere wenn der Deckel auf der Außenseite des Stahlbandes angeordnet ist, wird vorteilhaft verhindert, dass eine Beschädigung der Arretiervorrichtung mit Rastorgan beziehungsweise Schlitz oder anderer Komponenten des Systems zur Abdichtung eines Rohrleitungssystems insbesondere des auf der Außenseite des Stahlbandes angeordneten Gummibandes mit seinen fakultativen fluidfüllbaren Kammern erfolgt. Bei einer vollständigen Überdeckung des Schlitzes ist der Schutz im besonderen Maße gegeben. Durch diesen Schutz ist die Handhabung der Dichtungsmanschette darüber hinaus vereinfacht.

Weiterhin hat es sich besonders bewährt, wenigstens einen Deckel, insbesondere alle Deckel, mit einem Bandende insbesondere mit dem äußeren Bandende im Bereich des Schlitzes, der dem Deckel zugeordnet ist, fest zu verbinden insbesondere diesen Schlitz umschließend zu verbinden. Diese Verbindung erfolgt bevorzugt durch Verkleben, Verschweißen, Verlöten, durch Vernieten oder Verschrauben oder mittels einer Bajonettverbindung oder einer Rastverbindung. Diese Verbindungen gewährleisten eine sichere, teilweise lösbare Verbindung des Deckels mit einem Bandende, wodurch der Schutz gerade bei einer den Schlitz umschließenden Verbindung besonders ausgeprägt ist.

Eine besonders bevorzugte Dichtungsmanschette zeigt wenigstens einen Schlitz, der in seinem Endbereich einen Aufnahmebereich für einen Führungsabschnitt oder für einen Teil des Rastorgans aufweist. Dabei ist der Aufnahmebereich so ausgebildet, dass er keine Zähne aufweist. Dadurch gelingt es, insbesondere eine Ausgangsposition für das Rastorgan im Schlitz zu schaffen. In dieser Ausgangsposition kann die erfindungsgemäße Dichtungsmanschette transportiert, in das Rohrleitungssystem eingebracht und dort an die Leckstelle gebracht werden. In dieser Ausgangsposition ist die Rastverbindung noch nicht eingerastet und damit eine gewisse Flexibilität geschaffen, die eine Aufweitung oder Verengung bei Bedarf ermöglicht, ohne dass ein Einrasten erfolgt. Dies verbessert die vorbereitende Handhabung der erfindungsgemäßen Dichtungsmanschette, insbesondere den Transport der erfindungsgemäßen Dichtungsmanschette an die Leckstelle erheblich und ermöglicht insbesondere eine maschinelle Handhabung. An der Leckstelle wird die erfindungsgemäße Dichtungsmanschette aufgeweitet, wodurch das Rastorgan den Aufnahmebereich verlässt und mit den Rastflächen in die wenigstens eine Zahnreihe rastend eingreift, bis die gewünschte Dichtwirkung erreicht ist.

Eine bevorzugte Dichtungsmanschette zeigt in den Randbereichen eines oder mehrerer Bandenden im Überlappungsbereich ein oder mehrere Leitelemente, die das jeweilig andere Bandende aufnehmen und führen können. Alternativ oder ergänzend können Leitelemente auch im Bereich es Schlitzes angeordnet sein und durch den Schlitz hindurchkragen und das andere Bandende mit dem Schlitz aufnehmen und führen. Die Leitelemente sind dabei insbesondere klammerförmig so ausgebildet, dass sie den Rand des jeweils anderen Bandendes umschließen und dieses dadurch leiten und führen können. Dadurch gleitet das geführte innenliegende beziehungsweise außenliegende Bandende gleichmäßig an dem außenliegenden beziehungsweise innenliegenden Bandende entlang, so dass bevorzugt beide im Wesentlichen den gleichen und auch konstanten Radius zeigen. Dies ist insbesondere dann gegeben, wenn die Leitelemente den Rand des geführten Bandendes im Randbereich oder im Bereich des Schlitzes eng umschließen, ohne dass ein Klemmen des geführten Bandendes und somit die Möglichkeit eines widerstandsarmen Gleitens des geführten Bandendes gegeben ist. Die Führung im Bereich des Überlapps der Bandenden und damit im Bereich des oder der Rastorgane gewährleistet eine besonders gute und definierte Rastverbindung der Arretiervorrichtung und eine gute Handhabbarkeit der Dichtungsmanschette mit Arretiervorrichtung, die sich durch eine gleichmäßige Verstellkraft auszeichnet, was im Besonderen die Möglichkeit einer maschinellen Handhabung verbessert.

Ein erfindungsgemäßes System zur Abdichtung eines Rohrleitungssystems ist mit wenigstens einer erfindungsgemäßen Dichtungsmanschette und mit wenigstens einem Gummiband zum Einbringen zwischen einer Dichtungsmanschette und dem abzudichtenden Rohrleitungssystem im Bereich der Leckstelle versehen. Das Gummiband liegt auf der Außenseite des ringförmigen Stahlbleches der Dichtungsmanschette an und wird mit der Aufweitung der Dichtungsmanschette gedehnt und dabei gegen die Innenseite des abzudichtenden Rohrleitungssystems im Bereich der Leckstelle abdichtend gepresst. In dieser Position rasten die Rastverbindungen zwischen einem Rastorgan und der oder den Zahnreihen ein und stellen dadurch die dauerhafte Abdichtung sicher.

Vorzugsweise wird dabei die Dichtungsmanschette so gewählt, dass die Arretiervorrichtung mit Schlitz und Rastorgan am innenliegenden Bandende angeordnet ist und/oder bei einer Anordnung am außenliegenden Bandende diese mit einem den Schlitz weitgehend oder vollständig überdeckenden Deckel versehen ist, wodurch eine Beschädigung des Gummibandes durch die erfindungsgemäße Arretiervorrichtung ausgeschlossen oder das Risiko hierfür wesentlich verringert wird.

Das oder die Gummibänder sind dabei aus gummielastischen Material, bevorzugt aus Ethylen-Propylen-Dien-Kautschuk (EPDM), aus Ethylen-Propylen-Kautschuk (EPM), aus NaturKautschuk (NR), aus Nitril-Butadien-Kautschuk (NBR) oder aus Styrol-Butadien-Kautschuk (SBR) gefertigt. Dadurch sind eine dauerhafte Abdichtung sowie eine gute Handhabung durch die besondere gummielastische Eigenschaft des Materials des Gummibandes gegeben.

Bei einem besonders bevorzugten System zur inneren Abdichtung eines Rohrleitungssystems bildet das Gummiband einen Ring, der insbesondere im Randbereich wenigstens einen insbesondere ringförmigen Wulst mit vergrößerter Materialstärke und/oder wenigstens eine mit einem Fluid füllbare insbesondere schlauchförmige Kammer aufweist. Durch den oder die Wulste beziehungsweise den oder die schlauchförmigen Kammern gelingt es, eine verlässliche, vorzugsweise ringförmige Abdichtung im Randbereich des Gummibandes zur Innenwand des Rohrleitungssystems zu gewährleisten, wobei die ringförmige Abdichtung mit Hilfe der erfindungsgemäßen Dichtungsmanschette dichtend gegen die Innenwand gepresst wird. Diese Pressung wird mit Hilfe der rastenden Verbindung dauerhaft sichergestellt.

Durch das bevorzugte Vorsehen von Wulsten beziehungsweise Kammern in beiden Randbereichen des Gummibandes ist der Zwischenbereich des Gummibandes hermetisch abgeschlossen, so dass eine Leckstelle im Zwischenbereich besonders sicher und verlässlich abgedichtet ist. Bei den vorgesehenen ringförmigen Kammern wird die Dichtwirkung dadurch unterstützend erreicht, dass die Kammern mit einem Fluid insbesondere einer Flüssigkeit gefüllt werden kann und die Füllung mit Hilfe eines Rückschlagventils vor einer ungewollten Entleerung gesichert wird. Die Füllung wird dabei vorzugsweise ausschließlich mit einer Flüssigkeit vorgenommen, so dass die Dichtwirkung durch das Anpressen besonders verlässlich erreicht wird.

Darüber hinaus hat es sich bewährt, das bandförmige Stahlblech der Dichtungsmanschette mit einer Vorrichtung zur Führung des Gummibandes zu versehen, welche ein laterales Verschieben insbesondere Herausgleiten des Gummibandes gegenüber der Dichtungsmanschette verhindert. Alternativ oder kumulativ dazu hat es sich auch bewährt, eine Vorrichtung zur Führung der Dichtungsmanschette am Gummiband vorzusehen. Dadurch ist eine räumliche Zuordnung des oder der Gummibänder zu der erfindungsgemäßen Dichtungsmanschette vorgegeben und dadurch eine verlässliche Abdichtung mit Hilfe des angepressten Gummibandes gewährleistet.

Vorzugsweise wird die Vorrichtung zur Führung durch eine oder mehrere Erhebungen an der Dichtungsmanschette oder im Randbereich des Gummibandes gebildet, wobei die eine oder die mehreren Erhebungen entweder in entsprechende Ausnehmungen am Gummiband beziehungsweise an der Dichtungsmanschette eingreifen oder diese seitlich so umschließen, dass ein unerwünschtes Maß an seitlicher Verschiebung oder Herausgleiten verhindert ist.

Die erfindungsgemäßen Systeme und die erfindungsgemäßen Dichtungsmanschetten in den verschiedenen Ausprägungen erweisen sich in der Handhabung als besonders einfach und ermöglichen eine verbesserte, maschinell unterstützte Handhabung. Darüber hinaus gewährleistet die Erfindung aber auch eine sehr verlässliche und dauerhafte Abdichtung.

Im Folgenden werden das erfindungsgemäße System und die Dichtungsmanschette zur inneren Abdichtung eines Rohrleitungssystems anhand der beispielhaft ausgewählten und in den Figuren dargestellten Beispiele näher erläutert.

Die Erfindung ist nicht auf die beispielhaft in den Zeichnungen dargestellten Ausführungsformen beschränkt.

Es zeigen:
- Fig. 1: eine schematische Ansicht einer beispielhaften Dichtungsmanschette von der Seite,
- Fig. 2: eine Draufsicht des Überlappungsbereiches einer beispielhaften Dichtungsmanschette ohne Deckel,
- Fig. 3: eine Schrägansicht des Überlappungsbereiches einer beispielhaften Dichtungsmanschette und
- Fig. 4: einen Querschnitt eines beispielhaften Systems zur inneren Abdichtung eines Rohrleitungssystems mit Dichtungsmanschette und Gummiband.

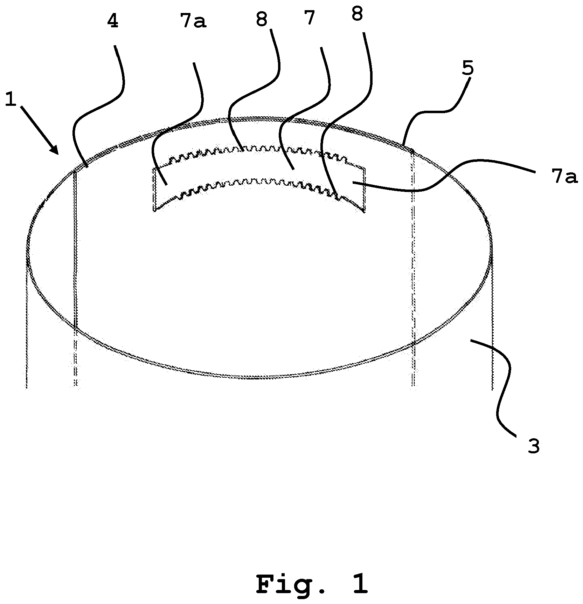

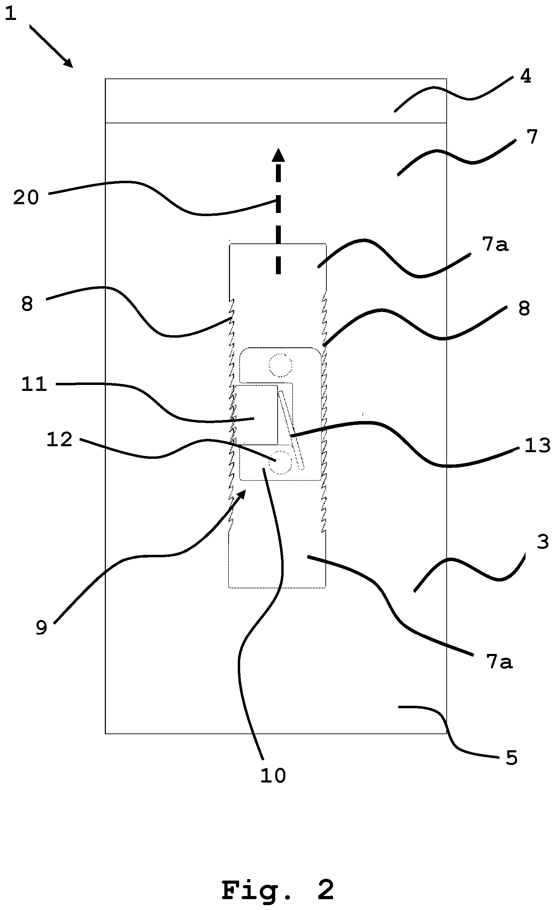

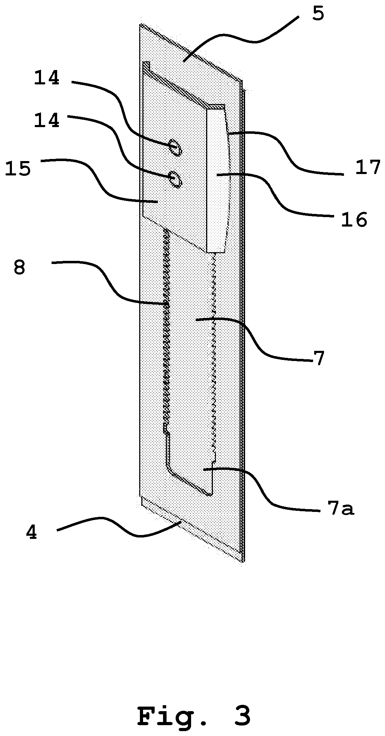

Die erfindungsgemäße Dichtungsmanschette 1 zum Einsetzen in ein Rohrleitungssystem zur inneren Abdichtung desselben besteht aus einem ringförmig zusammengebogenen, aufweitbaren, zwischen ein und drei Millimeter starken Stahlblech 3, dessen Bandenden 4, 5 sich in Umfangsrichtung 20 überlappen. Sie zeigt wenigstens eine Arretiervorrichtung in Gestalt eines im außenliegenden Bandende 5 angeordneten, in Umfangsrichtung 20 ausgerichteten Schlitzes 7 mit zwei Zahnreihen 8 und einem mit dem innenliegenden Bandende 4 verbundenen Rastorgan 9. Das Rastorgan 9 ist in Fig. 1 nicht dargestellt, der Schlitz 7 ist dabei in einer Durchsichtdarstellung wiedergegeben. In den Fig. 2 und 3 wird das Rastorgan 9 näher dargestellt.

Die erfindungsgemäße Dichtungsmanschette 1 wird von einem ringförmigen Gummiband 30 umschlossen und im verengten Zustand, also im nicht aufgeweiteten Zustand, in das Rohrleitungssystem eingebracht und dort an der Leckstelle positioniert. Danach wird das System aus Gummiband 30 und Dichtungsmanschette 1 aufgeweitet, bis die Dichtungsmanschette 1 mit dem Gummiband 30 flächig an der Innenseite des Rohrleitungssystems anliegt und die in diesem Bereich befindliche Leckstelle abdichtet. Mit Hilfe der Arretiervorrichtung wird sichergestellt, dass der aufgeweitete Zustand, der sich durch das abdichtende Anpressen der Dichtungsmanschette 1 mit dem Gummiband 30 auszeichnet, erhalten bleibt.

In Fig. 2 ist ein Ausschnitt der Dichtungsmanschette 1 dargestellt, der den Überlappungsbereich der Bandenden 4, 5 des bandförmigen Stahlblechs 3 zeigt. Das außenliegende Bandende 5 zeigt einen Schlitz 7, der sich in Umfangsrichtung 20 des ringförmig gebogenen, bandförmigen Stahlblechs 3 erstreckt. Entlang der beiden Längsseiten des Schlitzes 7 sind zwei Zahnreihen 8 angeordnet. Zu beiden Enden des Schlitzes 7 sind Aufnahmebereiche 7a angeordnet, die ohne Zähne ausgebildet sind und die das Rastorgan 9 anteilig aufnehmen können.

In Fig. 2 ist ein Zustand dargestellt, in dem das Rastorgan 9 den Aufnahmebereich 7a verlassen hat und rastend eingegriffen hat, indem die Rastzähne des Rastelementes 11 in die Zahnreihe 8 des Schlitzes 7 rastend eingegriffen hat.

Das Rastorgan 9 zeigt einen mehrteiligen Aufbau, bestehend aus einem u-förmigen Führungselement 10, zwischen dessen Schenkeln ein Rastelement 11 angeordnet ist. Das Rastelement 11 zeigt dabei eine Breite, die wenig geringer als der Abstand der Schenkel des u-förmigen Führungselementes 10 ist. Im Spalt zwischen der Basis des u-förmigen Führungselementes 10 und dem Rastelement 11 befindet sich ein als Federelement 13 ausgebildetes Spannelement 13. Dieses Federelement 13 spannt durch seine Federkraft das Rastelement 11 so vor, dass es aus dem Bereich zwischen den Schenkeln des u-förmigen Führungselements 10 heraus in Richtung einer Zahnreihe 8 gepresst wird. Durch diese Spannung wird die Rastwirkung des Rastorgans 9 in der Arretiervorrichtung der Dichtungsmanschette 1 festgelegt.

Das Rastorgan 9 mit u-förmigem Führungselement 10 mit Rastelement 11 und Federelement 13 zeigt eine plattenförmige Struktur mit einer im Wesentlichen einheitlich gleichen Höhe. Dies verbessert das Zusammenspiel der Komponenten des Rastorgans 9 und der Arretiervorrichtung der Dichtungsmanschette 1.

Das u-förmige Führungselement 10 zeigt dabei keine Rastflächen, während das Rastelement 11 an der der Zahnreihe 8 zugewandten Seite mehrere Rastzähne zeigt, die gemeinsam die eine einzige Rastfläche des Rastelements 11 bilden. Die Rastzähne des Rastelements 11 entsprechen hinsichtlich des Abstands und der Tiefe den Ausnehmungen der Zahnreihe 8 des Schlitzes 7, in die das Rastelement 11 des Rastorgans 9 rastend eingreift.

Dadurch ist ein gemeinsames Einrasten aller beziehungsweise mehrerer Rastzähne des Rastelementes 11 in die Zwischenräume der Zähne einer Zahnreihe 8 ermöglicht. Dies führt zu einer besonders sicheren, rastenden Verbindung.

Dabei sind die beiden Flächen der Zwischenräume der Zähne einer Zahnreihe 8 unterschiedlich stark gegenüber der Umfangsrichtung 20 schräg gestellt. Die in Umfangsrichtung 20 vorgelagert angeordnete Fläche ist weniger schräg zur Umfangsrichtung 20 (kleiner Winkel) ausgerichtet, während die andere Fläche einen größeren Winkel zur Umfangsrichtung 20 zeigt, also schräger ausgerichtet ist. Dies führt dazu, dass ein Erweitern der Dichtungsmanschette 1 auf weniger Widerstand durch das Rastorgan 9 führt, da die hierfür relevanten Rastflächen weniger steil ausgerichtet sind, als eine Verengung der Dichtungsmanschette 1, da die hierfür relevanten anderen Rastflächen steiler ausgerichtet sind.

Durch die differenzierte Steigung der Rastflächen gelingt es, das Erweitern der Dichtungsmanschette 1 und damit das Abdichten einfach und sicher zu bewerkstelligen, während die Verengung der Dichtungsmanschette 1 mit dem zugehörigen Zurückgleiten des Rastorgans 9 im Schlitz 7 erschwert oder gar verhindert wird.

Durch diese differenziert abgeschrägten Rastzähne und die unterschiedlich schräg verlaufenden Anlaufflächen der Zahnreihe 8 wird das rastende Gleiten des Rastorgans 9 entlang der Zahnreihen 8 in Umfangsichtung 20 (Aufweitung der Dichtungsmanschette 1) vereinfacht und im Gegenzug dazu in Gegenrichtung (Verengung der Dichtungsmanschette 1) erschwert.

Das Rastorgan 9 mit Führungselement 10, Rastelement 11 und dem als Federelement 13 ausgebildeten Spannelement 13 ist aus Stahl beziehungsweise aus Federstahl ausgebildet, wodurch die Funktionalität des Rastorgans 9 besonders dauerhaft sichergestellt ist.

Das Rastorgan 9 zeigt zwei zylinderförmige Ausnehmungen 12, die beabstandet zueinander angeordnet sind. Die Ausnehmungen 12 nehmen die Zapfen 14 auf, die mit dem innenliegenden Bandende 4 verschweißt sind und sich senkrecht von dem Stahlblech 3 des innenliegenden Bandendes 4 erheben. Der Durchmesser der Zapfen 14 ist geringer gewählt als der Durchmesser der zylinderförmigen Ausnehmungen 12 im Rastorgan 9. Dadurch besteht die Möglichkeit, dass sich das Rastorgan 9 auf beiden Zapfen 14 lateral zu den Längsausdehnungen der Zapfen 14 etwas bewegt und sich damit im Schlitz 7 insbesondere quer zur Längsrichtung des Schlitzes 7 etwas bewegen kann. Dadurch ist sowohl einen Toleranzausgleich als auch einen Kräfteausgleich in der Rastverbindung ermöglicht.

Wie in Fig. 3 zu erkennen ist, ragen die Zapfen 14 vom innenliegenden Bandende 4 beginnend über das Rastorgan 9 hinaus bis in einen oberhalb des Rastorgans 9 angeordneten Deckel 15. Die Höhe des Rastorgans 9 mit Führungselement 10, Rastelement 11 und Spannelement 13 entspricht etwa dem 3-fachen der Stärke des bandförmigen Stahlblechs 3. Dadurch ist eine sichere Rastverbindung des Rastorgans 9 zu den Zahnreihen 8 auch dann gewährleistet, wenn das außenliegende Bandende 5 nicht, wie in Fig. 1 und 3 dargestellt, auf dem innenliegenden Bandende 4 aufliegt, sondern von diesem erhaben ist, solange der Abstand nicht größer als die Höhe des Rastorgans 9 ist.

Durch das Vorsehen eines Deckels 15, wie er in Fig. 3 dargestellt ist, wird sichergestellt, dass sich das außenliegende Bandende 5 nicht zu weit vom innenliegenden Bandende 4 des Rastorgans 9 entfernen kann. Der Deckel 15 schränkt die Bewegungsfreiheit des innenliegenden Bandendes 4 in vertikaler/radialer Richtung ein und sichert dadurch die vorteilhafte Rastverbindung zwischen Rastorgan 9 und Zahnreihen 8 des Schlitzes 7.

Der in Fig. 3 dargestellte Deckel 15 ist mit den beiden Zapfen 14 verschweißt, so dass der Deckel 15 dauerhaft über die Zapfen 14 mit dem außenliegenden Bandende 5 verbunden ist. Der Deckel 15 ragt mit seiner planen Deckfläche seitlich über das Rastorgan 9 hinaus. Der Deckel 15 zeigt zwei Randbereiche 16, die lateral zur Umfangsrichtung 20 angeordnet sind und in Richtung der Bandenden 4, 5 abgeknickt ausgebildet sind. Durch das Abknicken wird der Bereich, in dem sich das innenliegende Bandende 4 von dem außenliegenden Bandende 5 entfernen kann, weiter eingeschränkt und dadurch die Sicherheit der Rastverbindung weiter erhöht.

Die Randlinien 17 der Randbereiche 16 des Deckels 15 zeigen die Kontur eines Kreissegmentes, dessen Radius etwa dem Innenradius des abzudichtenden Rohrleitungssystems entspricht. Dadurch gelingt es, das Risiko eines Abknickens des bandförmigen Stahlblechs 3 im Bereich des Rastorgans 9 mit Deckel 15 erheblich zu reduzieren und dadurch einerseits das Risiko einer Schädigung des Bandes 3 zu verhindern und andererseits die Handhabung zu erleichtern, da die aufzuwendenden Kräfte gleichmäßiger und geringer sind.

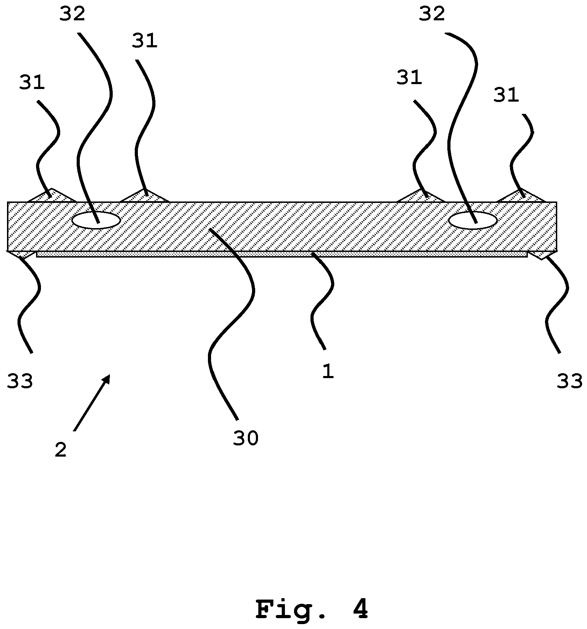

In Figur 4 ist ein Querschnitt eines beispielhaften, erfindungsgemäßen Systems 2 zur inneren Abdichtung eines Rohrleitungssystems mit Dichtungsmanschette 1 und Gummiband 30 dargestellt. An das Band 3 der Dichtungsmanschette 1 schließt sich in radialer Richtung das Gummiband 30 an, das sich im Zustand des Abdichtens mit der der Dichtungsmanschette 1 abgewandten Seite an die Innenseite des abzudichtenden Rohrleitungssystems dichtend anpresst.

Das Gummiband 30 zeigt rechts und links von der Dichtungsmanschette 1 ringförmige Erhebungen 33, die die Dichtungsmanschette 1 umschließen und ein seitliches Herausgleiten des Gummibandes 30 relativ zur Dichtungsmanschette 1 verhindern. Die ringförmigen Erhebungen 33 bilden die Vorrichtung 33 zur Führung des Gummibandes 30. Dies ist sehr wichtig für eine Montage unter schwierigen Bedingungen, die insbesondere maschinell also robotergeführt vorgenommen werden kann.

Auf der der Dichtungsmanschette 1 abgewandten Seite des Gummibandes 30 sind im linken und rechten Randbereich je zwei ringförmig die Dichtungsmanschette 1 umschließende Wulste 31 angeordnet, die einen keilförmigen Querschnitt aufweisen. Diese Wulste 31 legen sich an die Innenwand der Leckstelle im Rohrleitungssystem an und bilden jeweils geschossene Dichtungslinien, die auch Unebenheiten im Aufbau der Innenwand dichtend ausgleichen. Zusätzlich sind in dem Gummiband 30 im Bereich zwischen den Wulsten 31 je eine ringförmige Kammer 32 angeordnet, die mit einem Fluid insbesondere Wasser angefüllt werden können. Im gefüllten, ausgedehnten Zustand ermöglichen sie ein ringförmiges Anpressen des Gummibandes 30 im Bereich der Kammer 32 und damit ein besonders sicheres Abdichten.

Vorzugsweise werden die Kammern 32 erst nach dem Aufweiten der Dichtungsmanschette 1 und dem damit verbundenen Anpressen des Gummibandes 30 an die abzudichtende Innenwand des Rohrleitungssystems mit Fluid insbesondere mit Wasser gefüllt. Dadurch wird eine zusätzliche, dichtende Wirkung durch das Anpressen aufgrund der Befüllung der Kammern 32 erreicht. Um eine Befüllung der Kammern 32 mit Fluid zu ermöglichen, sind Zuführungen für das Fluid mit Rückschlagventil im Gummiband 30 vorgesehen. Die Zuführungen erstrecken sich durch Öffnungen in der Dichtungsmanschette 1, wodurch das Befüllen der Kammern 32 vom Innenraum des abzudichtenden Rohrleitungssystems durch die erfindungsgemäße Dichtungsmanschette 1 ermöglicht ist.

### Bezugszeichenliste:

- 1: Dichtungsmanschette
- 2: System zur inneren Abdichtung eines Rohrleitungssystems
- 3: Band, Stahlblech, Stahlband
- 4: innenliegendes Bandende
- 5: außenliegendes Bandende
- 7: Schlitz
- 7a: Aufnahmebereich des Schlitzes
- 8: Zahnreihe
- 9: Rastorgan
- 10: u-förmiges Führungselement
- 11: Rastelement
- 12: Ausnehmung
- 13: Spannelement, Federelement
- 14: Erhebung, Zapfen
- 15: Deckel
- 16: abgeschrägter Rand des Deckels
- 17: Randlinie des Deckels
- 20: Umfangsrichtung
- 30: Gummiband
- 31: Wulst
- 32: ringförmige Kammer
- 33: Vorrichtung zur Führung des Gummibandes

## Patentansprüche

1. Dichtungsmanschette (1) zum Einsetzen in ein Rohrleitungssystem zwecks Abdichtung einer Leckstelle, mit einem ringförmig zusammengebogenen, aufweitbaren Stahlblech (3), dessen innenliegendes Bandende (4) und außenliegendes Bandende (5) sich in Umfangsrichtung (20) überlappen,
mit wenigstens einer Arretiervorrichtung in Gestalt eines im Stahlband (3) in Umfangsrichtung (20) angeordneten Schlitzes (7) mit wenigstens einer Zahnreihe (8) und wenigstens einem Rastorgan (9), das geeignet ist, in wenigstens eine Zahnreihe (8) rastend einzugreifen,
wobei wenigstens ein Rastorgan (9) mehrteilig mit wenigstens einem Führungselement, wenigstens einem Rastelement und wenigstens einem Spannelement (13) ausgebildet ist,
wobei wenigstens ein Rastorgan (9) mit wenigstens einem in einem Spalt zwischen einem Führungselement (10) und einem Rastelement (11) angeordneten Spannelement (13) so ausgebildet ist, dass die Spannkraft zwischen dem Führungselement (10) und dem Rastelement (11) veränderlich ist und dadurch die Rastwirkung des Rastorgans (9) veränderlich ist,
**dadurch gekennzeichnet,**
**dass** wenigstens ein Führungselement (10) eines Rastorgans (9) u-förmig wenigstens ein Rastelement (11) umgreifend und dieses in der Bewegung führend ausgebildet ist oder dass wenigstens ein Rastelement (11) eines Rastorgans (9) u-förmig wenigstens ein Führungselement (10) umgreifend und dieses in der Bewegung führend ausgebildet ist.

2. Dichtungsmanschette (1) zum Einsetzen in ein Rohrleitungssystem nach Anspruch 1, **dadurch gekennzeichnet,**
**dass** sie wenigstens eine Arretiervorrichtung in Gestalt eines im innenliegenden Bandende (4) in Umfangsrichtung (20) angeordneten Schlitzes (7) mit wenigstens einer Zahnreihe (8) und wenigstens ein mit dem außenliegenden Bandende (5) verbundenes Rastorgan (9) aufweist, das geeignet ist, in wenigstens eine Zahnreihe (8) rastend einzugreifen.

3. Dichtungsmanschette (1) zum Einsetzen in ein Rohrleitungssystem nach Anspruch 1, **dadurch gekennzeichnet,**
**dass** sie wenigstens eine Arretiervorrichtung in Gestalt eines im außenliegenden Bandende (5) in Umfangsrichtung (20) angeordneten Schlitzes (7) mit wenigstens einer Zahnreihe (8) und wenigstens ein mit dem innenliegenden Bandende (4) verbundenes Rastorgan (9) aufweist, das geeignet ist, in wenigstens eine Zahnreihe (8) rastend einzugreifen.

4. Dichtungsmanschette (1) zum Einsetzen in ein Rohrleitungssystem nach Anspruch 1, **dadurch gekennzeichnet,**
**dass** wenigstens ein innenliegendes Bandende (4) in einer Nut zwischen außenliegendem Bandende (5) und einer mit dem außenliegenden Bandende (5) fest verbundenen Deckfläche geführt ist und dass wenigstens ein Rastorgan (9) in einem Schlitz (7) in der Deckfläche und/oder in dem außenliegenden Bandende (5) schwimmend gelagert ist.

5. Dichtungsmanschette nach einem der vorstehenden Ansprüche, **dadurch gekennzeichnet, dass** wenigstens ein Spannelement (13) als Keil und/oder als Federelement (13) ausgebildet ist.

6. Dichtungsmanschette nach einem der vorstehenden Ansprüche, **dadurch gekennzeichnet, dass** mehrere Spannelemente (13) in einem einzigen Spalt zwischen einem Führungselement (10) und einem Rastelement (11) angeordnet sind.

7. Dichtungsmanschette nach einem der vorstehenden Ansprüche, **dadurch gekennzeichnet, dass** wenigstens ein Vorsprung an einem Führungselement (10) oder einem Rastelement (11) vorgesehen ist, der in eine korrespondierende Ausnehmung in einem Rastelement (11) oder Führungselement (10) eingreift und dieses führend leitet.

8. Dichtungsmanschette nach einem der vorstehenden Ansprüche 1 bis 7, **dadurch gekennzeichnet, dass** wenigstens ein Rastorgan (9) mit dem innenliegenden Bandende (4) oder dem außenliegenden Bandende (5) lösbar verbunden ist und wenigstens eine Ausnehmung (12) zur Aufnahme wenigstens einer Erhebung (14) insbesondere eines Zapfens (14) am innenliegenden Bandende (4) oder am außenliegenden Bandende (5) aufweist.

9. Dichtungsmanschette nach Anspruch 8, **dadurch gekennzeichnet, dass** die Ausnehmung (12) und die wenigstens eine Erhebung (14), insbesondere der wenigstens eine Zapfen (14), zur verdrehsicheren Aufnahme ausgebildet sind.

10. Dichtungsmanschette nach einem der vorstehenden Ansprüche, **dadurch gekennzeichnet, dass** wenigstens ein Schlitz (7) im Endbereich einen Aufnahmebereich (7a) für einen Führungsabschnitt oder für ein Rastorgan (9) aufweist, wobei der Aufnahmebereich (7a) keine Zähne aufweist.

11. Dichtungsmanschette nach einem der vorstehenden Ansprüche, **dadurch gekennzeichnet, dass** ein oder mehrere Leitelemente im Randbereich eines Bandendes (4, 5) oder im Bereich eines Schlitzes (7) an einem Bandende (4, 5) angeordnet sind und geeignet sind, das andere Bandende (5, 4) im Überlappungsbereich aufzunehmen und zu führen, wobei die Leitelemente insbesondere klammerförmig ausgebildet sind und den Rand des anderen Bandendes (5, 4) insbesondere eng umschließen.

12. System zur inneren Abdichtung eines Rohrleitungssystems mit wenigstens einer Dichtungsmanschette (1) nach einem der vorstehenden Ansprüche und mit Gummiband (30) zum Einbringen zwischen einer Dichtungsmanschette (1) und dem abzudichtenden Rohrleitungssystem.

13. System zur inneren Abdichtung eines Rohrleitungssystems nach Anspruch 12, **dadurch gekennzeichnet, dass** das Gummiband (30) einen Ring bildet und insbesondere in wenigstens einem Randbereich wenigstens einen Wulst(31) mit vergrößerter Materialstärke und/oder wenigstens eine mit einem Fluid füllbare insbesondere schlauchförmige Kammer (32) aufweist.

14. System zur inneren Abdichtung eines Rohrleitungssystems nach Anspruch 12 oder 13, **dadurch gekennzeichnet, dass** das bandförmige Stahlblech (3) der Dichtungsmanschette (1) eine Vorrichtung zur Führung des Gummibandes (30) oder das Gummiband (30) eine Vorrichtung (33) zur Führung der Dichtungsmanschette (1) aufweist, welche ein laterales Verschieben insbesondere Herausgleiten des Gummibandes (30) von der Dichtungsmanschette (1) verhindert.

## Claims

1. Sealing sleeve (1) for insertion into a piping system for the purpose of sealing a leak, comprising an annularly bent, expandable steel sheet (3), the inner strip end (4) and outer strip end (5) of which overlap in the peripheral direction (20),
comprising at least one locking device in the form of a slot (7) which is arranged in the steel strip (3) in the peripheral direction (20) and has at least one row of teeth (8), and at least one detent member (9) which is suitable for engaging in at least one row of teeth (8) in a detenting manner,
wherein at least one detent member (9) is multipart with at least one guide element, at least one detent element and at least one tensioning element (13)
is formed, wherein
at least one detent member (9) with at least one tensioning element (13) arranged in a gap between a guide element (10) and a detent element (11) is designed in such a manner that the clamping force between the guide element (10) and the detent element (11) is variable and thus the latching effect of the detent member (9) is variable,
**characterized in that**
at least one guide element (10) of a detent member (9) is U-shaped such that it surrounds at least one detent element (11) and guides movement thereof, or **in that** at least one detent element (11) of a detent member (9) is U-shaped such that it surrounds at least one guide element (10) and guides movement thereof.

2. Sealing sleeve (1) for insertion into a piping system according to claim 1, **characterized in that**
it has at least one locking device in the form of a slot (7) arranged in the inner strip end (4) in the circumferential direction (20) with at least one row of teeth (8) and at least one detent member (9) connected to the outer strip end (5), which is suitable for engaging in at least one row of teeth (8) in a locking manner.

3. Sealing sleeve (1) for insertion into a piping system according to claim 1, **characterized in that**
it has at least one locking device in the form of a slot (7) arranged in the outer strip end (5) in the circumferential direction (20) with at least one row of teeth (8) and at least one detent member (9) connected to the inner strip end (4), which is suitable for engaging in at least one row of teeth (8) in a locking manner.

4. Sealing sleeve (1) for insertion into a piping system according to claim 1, **characterized in that**
at least one inner strip end (4) is guided in a groove between the outer strip end (5) and a cover surface firmly connected to the outer strip end (5)
and **in that** at least one detent member (9) is floatingly mounted in a slot (7) in the cover surface and/or in the outer strip end (5).

5. Sealing sleeve according to any of the preceding claims,
**characterized in that** at least one tensioning element (13) is designed as a wedge and/or as a spring element (13).

6. Sealing sleeve according to any of the preceding claims,
**characterized in that** a plurality of tensioning elements (13) are arranged in a single gap between one guide element (10) and one detent element (11).

7. Sealing sleeve according to any of the preceding claims,
**characterized in that** at least one projection is provided on a guide element (10) or a detent element (11), which engages in a corresponding recess in a detent element (11) or guide element (10) and guides it in a leading manner.

8. Sealing sleeve according to any of the preceding claims 1 to 7,
**characterized in that** at least one detent member (9) is detachably connected to the inner strip end (4) or the outer strip end (5) and has at least one recess (12) for receptacle of at least one protrusion (14), in particular a pivot (14), on the inner strip end (4) or on the outer strip end (5).

9. Sealing sleeve according to claim 8, **characterized in that** the recess (12) and the at least one protrusion (14), in particular the at least one pivot (14), are designed for torsion-proof receptacle.

10. Sealing sleeve according to any of the preceding claims,
**characterized in that** at least one slot (7) in the end area has a receiving area (7a) for a guide portion or for a detent member (9), wherein the receiving area (7a) has no teeth.

11. Sealing sleeve according to any of the preceding claims,
**characterized in that** one or more guiding elements are arranged in the edge area of one strip end (4, 5) or in the area of a slot (7) at one strip end (4, 5) and are suitable for receiving and guiding the other strip end (5, 4) in the overlap area, wherein the guiding elements are designed in particular in the form of clips and enclose the edge of the other strip end (5, 4) in particular tightly.

12. System for the internal sealing of a piping system comprising at least one sealing sleeve (1) according to any of the preceding claims and having a rubber band (30) for inserting between a sealing sleeve (1) and the piping system to be sealed.

13. System for the internal sealing of a piping system according to claim 12, **characterized in that** the rubber band (30) forms a ring and, in particular in at least one edge region, has at least one bead (31) with increased material thickness and/or at least one in particular tubular chamber (32) which can be filled with a fluid.

14. System for the internal sealing of a piping system according to either claim 12 or claim 13, **characterized in that** the strip-shaped steel sheet (3) of the sealing sleeve (1) has a device for guiding the rubber band (30) or the rubber band (30) has a device (33) for guiding the sealing sleeve (1), which prevents lateral displacement, in particular the sliding out of the rubber band (30) relative to the sealing sleeve (1).

## Revendications

1. Manchon d'étanchéité (1) destiné à être inséré dans un système de canalisation dans le but d'assurer l'étanchéité d'une fuite, comportant une tôle d'acier (3) repliée en forme d'anneau et pouvant être élargie, dont l'extrémité de bande (4) située à l'intérieur et l'extrémité de bande (5) située à l'extérieur se chevauchent dans la direction circonférentielle (20),
comportant au moins un dispositif d'arrêt sous la forme d'une fente (7) disposée dans la bande d'acier (3) dans la direction circonférentielle (20), ladite fente comportant au moins une rangée de dents (8) et au moins un organe d'encliquetage (9) qui est adapté pour entrer en prise par encliquetage dans au moins une rangée de dents (8),
dans lequel au moins un organe d'encliquetage (9) est réalisé en plusieurs parties avec au moins un élément de guidage, au moins un élément d'encliquetage et au moins un élément de serrage (13),
dans lequel
au moins un organe d'encliquetage (9) comportant au moins un élément de serrage (13) disposé dans un interstice entre un élément de guidage (10) et un élément d'encliquetage (11) est réalisé de sorte que la force de serrage entre l'élément de guidage (10) et l'élément d'encliquetage (11) est variable et que l'effet d'encliquetage de l'organe d'encliquetage (9) est ainsi variable,
**caractérisé en ce**
**que**
au moins un élément de guidage (10) d'un organe d'encliquetage (9) est réalisé en forme de U de manière à entourer au moins un élément d'encliquetage (11) et à guider celui-ci dans le mouvement **ou en ce qu'**au moins un élément d'encliquetage (11) d'un organe d'encliquetage (9) est réalisé en forme de U de manière à entourer au moins un élément de guidage (10) et à guider celui-ci dans le mouvement.

2. Manchon d'étanchéité (1) destiné à être inséré dans un système de canalisation selon la revendication 1, **caractérisé en ce**
**que** ledit manchon d'étanchéité présente au moins un dispositif d'arrêt sous la forme d'une fente (7) disposée dans l'extrémité de bande (4) située à l'intérieur dans la direction circonférentielle (20), ladite fente comportant au moins une rangée de dents (8) et au moins un organe d'encliquetage (9) relié à l'extrémité de bande (5) située à l'extérieur et adapté pour entrer en prise par encliquetage dans au moins une rangée de dents (8).

3. Manchon d'étanchéité (1) destiné à être inséré dans un système de canalisation selon la revendication 1, **caractérisé en ce**
**que** ledit manchon d'étanchéité présente au moins un dispositif d'arrêt sous la forme d'une fente (7) disposée dans l'extrémité de bande (5) située à l'extérieur dans la direction circonférentielle (20), ladite fente comportant au moins une rangée de dents (8) et au moins un organe d'encliquetage (9) relié à l'extrémité de bande (4) située à l'intérieur et adapté pour entrer en prise par encliquetage dans au moins une rangée de dents (8).

4. Manchon d'étanchéité (1) destiné à être inséré dans un système de canalisation selon la revendication 1, **caractérisé en ce**
**qu'**au moins une extrémité de bande (4) située à l'intérieur est guidée dans une rainure entre l'extrémité de bande (5) située à l'extérieur et une surface de recouvrement solidaire de l'extrémité de bande (5) située à l'extérieur
**et qu**'au moins un organe d'encliquetage (9) est logé de manière flottante dans une fente (7) dans la surface de recouvrement et/ou dans l'extrémité de bande (5) située à l'extérieur.

5. Manchon d'étanchéité selon l'une des revendications précédentes, **caractérisé en ce qu'**au moins un élément de serrage (13) est réalisé sous la forme d'une cale et/ou d'un élément formant ressort (13).

6. Manchon d'étanchéité selon l'une des revendications précédentes, **caractérisé en ce que** plusieurs éléments de serrage (13) sont disposés dans un seul interstice entre un élément de guidage (10) et un élément d'encliquetage (11).

7. Manchon d'étanchéité selon l'une des revendications précédentes, **caractérisé en ce qu'il** est prévu au moins une saillie sur un élément de guidage (10) ou un élément d'encliquetage (11), laquelle saillie vient en prise dans un évidement correspondant dans un élément d'encliquetage (11) ou un élément de guidage (10) et guide celui-ci.

8. Manchon d'étanchéité selon l'une des revendications 1 à 7 précédentes, **caractérisé en ce qu'**au moins un organe d'encliquetage (9) est relié de manière amovible à l'extrémité de bande (4) située à l'intérieur ou à l'extrémité de bande (5) située à l'extérieur et présente au moins un évidement (12) destiné à recevoir au moins un bossage (14), en particulier un tenon (14), au niveau de l'extrémité de bande (4) située à l'intérieur ou au niveau de l'extrémité de bande (5) située à l'extérieur.

9. Manchon d'étanchéité selon la revendication 8, **caractérisé en ce que** l'évidement (12) et l'au moins un bossage (14), en particulier l'au moins un tenon (14), sont réalisés pour être reçus de manière à résister à la torsion.

10. Manchon d'étanchéité selon l'une des revendications précédentes, **caractérisé en ce qu'**au moins une fente (7) dans la zone d'extrémité présente une zone de réception (7a) pour une section de guidage ou pour un organe d'encliquetage (9), dans lequel la zone de réception (7a) ne présente pas de dents.

11. Manchon d'étanchéité selon l'une des revendications précédentes, **caractérisé en ce qu'**un ou plusieurs éléments conducteurs sont disposés dans la zone de bord d'une extrémité de bande (4, 5) ou dans la zone d'une fente (7) au niveau d'une extrémité de bande (4, 5) et sont adaptés pour recevoir et guider l'autre extrémité de bande (5, 4) dans la zone de chevauchement, dans lequel les éléments conducteurs sont en particulier réalisés en forme de pince et entourent en particulier étroitement le bord de l'autre extrémité de bande (5, 4).

12. Système permettant d'assurer l'étanchéité intérieure d'un système de canalisation comportant au moins un manchon d'étanchéité (1) selon l'une des revendications précédentes et comportant une bande en caoutchouc (30) destinée à être introduite entre un manchon d'étanchéité (1) et le système de canalisation à rendre étanche.

13. Système permettant d'assurer l'étanchéité intérieure d'un système de canalisation selon la revendication 12, **caractérisé en ce que** la bande en caoutchouc (30) forme un anneau et présente, en particulier dans au moins une zone de bord, au moins un bourrelet (31) comportant une épaisseur de matériau accrue et/ou au moins une chambre (32), en particulier en forme de tuyau, pouvant être remplie d'un fluide.

14. Système permettant d'assurer l'étanchéité intérieure d'un système de canalisation selon la revendication 12 ou 13, **caractérisé en ce que** la tôle d'acier (3) en forme de bande du manchon d'étanchéité (1) présente un dispositif permettant le guidage de la bande en caoutchouc (30) ou la bande en caoutchouc (30) présente un dispositif (33) permettant le guidage du manchon d'étanchéité (1), lequel dispositif empêche un déplacement latéral, en particulier un glissement de la bande en caoutchouc (30) hors du manchon d'étanchéité (1).
